# EUROPÄISCHE PATENTANMELDUNG

(11) **EP 4 568 081 A1**
(43) Veröffentlichungstag der Anmeldung: **11.06.2025**
(21) Anmeldenummer: 23214010.3
(22) Anmeldetag: 04.12.2023
(51) Int. Cl.: H02K 15/00, B22D 19/00, H02K 1/28, H02K 1/32

(54) **ROTORBAUGRUPPE MIT GEGOSSENEM KÄFIG UND INTEGRIERTEN KÜHLKANÄLEN SOWIE HERSTELLUNGSVERFAHREN FÜR DERARTIGE ROTORBAUGRUPPE**

(71) Anmelder: Wieland eTraction Systems GmbH, 42555 Velbert (DE); Walter Henrich GmbH, 57567 Daaden (DE)
(72) Erfinder: RUTJES, Manuel, 44869 Bochum (DE); SZILÁGYI, Péter, 42555 Velbert (DE); MÜLLER, Sören, 57567 Daaden (DE); STEINMETZ, Uwe, 57520 Steinebach/Sieg (DE)
(74) Vertreter: Bardehle Pagenberg Partnerschaft mbB Patentanwälte Rechtsanwälte

(57) **Zusammenfassung**

Die vorliegende Anmeldung betrifft ein Verfahren zum Formen einer Rotorbaugruppe, umfassend Erhitzen eines Rotorblechpakets, das eine Vielzahl von Kanälen für einen Käfig eines Käfigläufers aufweist, vorzugsweise auf eine Temperatur T ≥ 50°C, mehr bevorzugt auf eine Temperatur T ≥ 200°C, und noch mehr bevorzugt auf eine Temperatur T ≥ 500°C. Das Verfahren umfasst ferner Formen der Rotorbaugruppe, durch Anordnen des erhitzen Rotorblechpakets auf dem Mantelrohr, und Vergießen der Kanäle des erhitzen Rotorblechpakets mit einem Metall, das eine Leitfähigkeit größer als 20 × 10⁶ S/m aufweist, und Abkühlen der Rotorbaugruppe, um eine kraftschlüssige Verbindung zwischen dem Rotorblechpaket und dem Mantelrohr auszubilden. Die vorliegende Anmeldung betrifft ferner eine entsprechende Rotorbaugruppe, einen entsprechenden Rotor für eine elektrische Maschine, und eine entsprechende elektrische Maschine.

## Beschreibung

### 1. Technisches Gebiet

Die vorliegende Anmeldung betrifft eine Rotorbaugruppe für elektrische Maschinen mit einem gegossenen Käfig und integrierten Kühlkanälen zur aktiven Rotorkühlung, sowie einen Rotor und eine elektrische Maschine mit einem solchen Rotor.

### 2. Stand der Technik

Bei rotierenden elektrischen Maschinen wird der gesamte rotierende Teil der Maschine als Rotor bzw. Läufer bezeichnet, der typischerweise eine Rotorwelle und ein Blechpaket aufweist. Eine Synchronmaschine ist eine elektrische Maschine, in der der Rotor synchron mit dem Drehfeld des Stators läuft. In diesem Fall werden die Blechpakete mit Dauermagneten versehen und typischerweise auf die Rotorwelle gefügt.

Eine Asynchronmaschine ist eine Drehstrommaschine, bei der der Rotor im Betrieb als Elektromotor mit niedrigerer Drehzahl läuft als das Drehfeld des Stators. In der Massenfertigung wird das Blechpaket des Rotors typischerweise mit Nuten oder Kanälen versehen, die danach mit einem gut leitfähigen Metall wie z.B. Kupfer, oder Aluminium ausgegossen werden. Diese gegossenen Kanäle bilden den sog. Käfig, in dem das Magnetfeld des Rotors entsteht. Umso reiner das Vergießen der Kanäle in den Blechpaketen gelingt (d.h. u.a. eine niedrige Porosität), umso höher liegt bei sonst gleichen Eigenschaften die Effizienz des Motors.

Bei einem aus der EP 3 113 337 A1 der Anmelderin bekannten Gießverfahren zum Gießen von Rotoren ist an einem oberen und an einem unteren Kurzschlussring jeweils ein Anschnitt vorgesehen, über den gleichzeitig flüssiges Metall (z.B. Aluminium, Kupfer, Silber, deren Legierungen etc.) in die Gießform eingebracht wird.

Dadurch kann die Gießform mit einer niedrigeren Strömungsgeschwindigkeit vergossen werden, wodurch die Füllung weniger turbulent verläuft, was die Porenbildung mindert. Auch die DE 10 2013 208 151 A1 der Anmelderin betrifft ein Gießverfahren zum Gießen von Kupferrotoren, bei denen das geschmolzene Metall unter Druck mit einer Strömungsgeschwindigkeit von ≤ 15 m/s an einem Anschnitt der Gießform eingebracht wird, um ein ruhigeres, turbulenzarmes Füllen der Gießform und damit eine geringere Porosität der vergossenen Kanäle zu erzielen. Ferner betrifft die EP 3 866 316 A1 der Anmelderin ein Verfahren und eine Gießform zur Herstellung eines Läufers bzw. Rotors für eine Elektromaschine, wobei der Läufer einen Metallkern, einen unteren Kurzschlussring, einem oberen Kurzschlussring, und lamellenförmige Leiter umfasst, die die Kurzschlussringe verbinden, wobei das Verfahren mit einer Gießmaschine und einer Gießform durchgeführt wird, wobei ein geschmolzenes Metall in der Gießform am Metallkern angebracht wird, wobei das Metall Kupfer, Aluminium oder Silber ist, wobei der Läufer mit seiner Rotationsachse vertikal relativ zu einer Horizontalebene der Gießform ausgebildet wird, wobei das Metall an einem Anschnitt an dem unteren Kurzschlussring in die Gießform eingebracht wird und die Leiter und den oberen Kurzschlussring ausfüllt, wobei das Metall in eine variable Kammer an dem oberen Kurzschlussring eingebracht wird, wobei mittels eines Stößels das in der Kammer befindliche Metall mit einem Druck beaufschlagt und in den oberen Kurzschlussring verdrängt wird. Ein ähnliches Verfahren zum porenfreien Vergießen von Blechpaketen von Käfigläufern ist in der EP 3 866 315 A1 der Anmelderin beschrieben.

Ferner ist bekannt, dass sich Rotorwellen rotierender elektrischer Maschinen, während ihrer Nutzung erwärmen. Die entstehende Wärme kann beispielswiese auf die Stator- und / oder Rotorwicklungen übertragen werden. Dies kann zu unerwünschter Materialverformung führen und den Wirkungsgrad der elektrischen Maschine verringern. Um dies zu verhindern, kann der Erwärmung durch passive oder aktive Kühlung entgegengewirkt werden. Ein Beispiel dafür ist eine Luftkühlung, bei der Luft über und / oder durch die elektrische Maschine geleitet wird. Ein anderer Ansatz ist die aktive Kühlung des Rotors über ein flüssiges Kühlmedium.

Das Befestigen der vergossenen Blechpakete auf einer Rotorwelle ist typischerweise eine besondere Herausforderung, insbesondere da die Festigkeit der Fügeverbindung und die Restunwucht Einfluss auf Lebensdauer und das Schwingverhalten des gesamten Motors haben können. Aus diesem Grund muss die zylindrische Passfläche der Rotorwelle für das Blechpacket und ggf. die Innenfläche des vergossenen Blechpakets vor dem Zusammenbau typischerweise präzisionsgeschliffen werden, um eine kontrollierte Überdeckung im Presssitz zu erhalten. Das Schleifen dieser Bereiche ist einer der großen Kostentreiber bei der Produktion von Rotoren für elektrische Maschinen.

### 3. Zusammenfassung

Die vorliegende Anmeldung stellt sich daher die Aufgabe, die aus dem Stand der Technik bekannten Fertigungsverfahren, Rotorbaugruppen und Rotoren zumindest teilweise zu verbessern. Dieses Problem wird zumindest teilweise durch den Gegenstand der unabhängigen Ansprüche der vorliegenden Anmeldung gelöst. Beispielhafte Ausführungsformen sind in den abhängigen Ansprüchen beschrieben. Wo nicht anders angegeben sind Materialeigenschaften nach den einschlägigen Normen zu bestimmen. Ferner ist im Folgenden der Begriff "*im Wesentlichen*" als "*innerhalb typischer Konstruktions-, Mess- und* / *oder Fertigungstoleranzen*" zu verstehen.

Die vorliegende Anmeldung offenbart insbesondere eine Rotorbaugruppe für elektrische Maschinen mit einem gegossenen Käfig und, optionalen integrierten Kühlkanälen zur aktiven Rotorkühlung sowie ein zugehöriges Herstellungsverfahren, die es erlauben, einige der üblicherweise notwendigen, aufwendigen und kostenintensiven Fertigungsschritte zu vereinfachen und / oder wegzulassen. Ferner führt die Kombination der hier beschriebenen porenfreien vergossenen Blechpakete und der hier beschriebene aktiv gekühlten Rotorwellen wegen der Temperaturabhängigkeit der Leitfähigkeit von Metallen zu einer nicht-linearen Verbesserung der Effizienz und der maximalen Drehmoment- bzw. Leistungsdichte damit ausgestatteter elektrischer Maschinen.

Ein erster Aspekt der vorliegenden Anmeldung betrifft ein Verfahren zum Formen einer Rotorbaugruppe, umfassend die folgenden Schritte: Erhitzen eines Rotorblechpakets, das eine Vielzahl von Kanälen für einen Käfig eines Käfigläufers aufweist, bevorzugt auf eine Temperatur T ≥ 50°C, mehr bevorzugt T ≥ 200°C, und noch mehr bevorzugt T ≥ 500°C, und Formen der Rotorbaugruppe, durch Anordnen des erhitzen Rotorblechpakets auf dem Mantelrohr und Vergießen der Kanäle des erhitzen Rotorblechpakets mit einem Metall, das eine Leitfähigkeit größer als 20 × 106 S/m aufweist, und Abkühlen der Rotorbaugruppe um eine kraftschlüssige Verbindung zwischen dem Rotorblechpaket und dem Mantelrohr auszubilden. Insbesondere kann das erhitzte Rotorblechpaket, dass auf dem Mantelrohr angeordnet ist unter Verwendung einer Gießform und / oder eines Gießverfahrens vergossen werden, wie sie in den vorstehend genannten Anmeldungen EP 3 866 315 A1, EP 386 6316 A1, EP 3 113 337 und DE 10 2013 208 151 A1 der Anmelderin beschrieben sind, die hier vollständig durch Verweis einbezogen seien.

In einigen Implementierungen kann das hierin beschriebene Verfahren ferner ein Formen eines Mantelrohrs mit einer Länge L umfassen, und das Formen des Mantelrohrs kann ferner vorzugsweise die folgenden Schritte umfassen: Formen eines Mantelrohrrohlings, Bestimmen eines kalibrierten Abschnitts des Mantelrohrrohlings mit der Länge L, wobei entlang der Länge L die Abweichung der Mantelfläche des kalibrierten Abschnitts des Mantelrohrrohlings von der vorbestimmten Mantelreferenzfläche um weniger als 0.04 mm, vorzugsweise weniger als 0.02 mm, abweicht, und Abtrennen des kalibrierten Abschnitts des Mantelrohrrohlings.

Die für das Anordnen des Rotorblechpakets auf dem des Mantelrohr benötigte Wärme kann damit auch beim Vergießen der Kanäle des Rotorblechpakets genutzt werden. Die warme Baugruppe kann also direkt aus dem Fügevorgang zum Vergießen transportiert werden. Dadurch verringert sich der Energieeinsatz beim Vergießen, da das Blechpaket kein weiteres Mal erhitzt werden muss oder nur teilweise auf eine Vergusstemperatur weiter erhitz werden muss, die höher sein kann als die Fügetemperatur. Ein weiterer Vorteil des hierin beschriebenen Verfahrens besteht darin, dass sich durch die höhere Masse des vergossenen Blechpakets beim Abkühlen eine stärkere Schrumpfung relativ zur Mantelfläche des Mantelrohrs ergibt, was die kraftschlüssige Verbindung zwischen Rotorblechpaket und Mantelrohr verbessert.

In einigen Implementierungen kann das Formen der Rotorbaugruppe ferner ein Fügen von einem oder zwei Endstopfen mit dem Mantelrohr umfassen, vorzugsweise vor dem Vergießen der Kanäle. Insbesondere kann das Fügen ein Einpressen des einen oder der zwei Endstopfen in das Mantelrohr umfassen. Beim Einpressen der Stopfen ergibt sich eine zusätzliche Kraftkomponente radial von innen nach außen, die die Haltekraft der kraftschlüssigen Verbindung zwischen Blechpaket und Mantelrohr zusätzlich erhöht. Sollen die Stopfen nach dem Fügen zusätzlich verschweißt werden, kann das Mantelrohr einigen Ausführungen leicht über das Rotorblechpaket herausstehen.

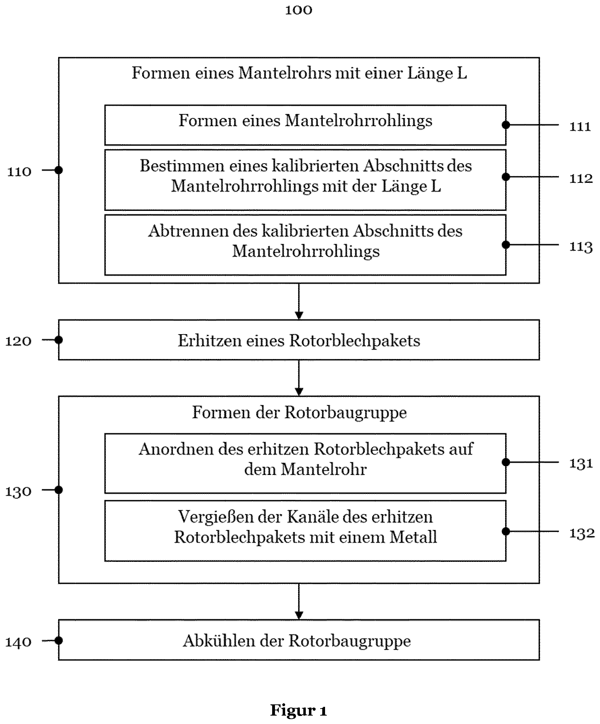

Ferner kann durch das vorstehend beschriebene Verfahren und insbesondere durch das Verwenden eines Mantelrohrs mit kalibriertem Außendurchmesser das üblicherweise notwendige Schleifen der Mantelfläche der Rotorwelle entfallen oder es kann zumindest durch ein günstigeres Verfahren wie z.B. spitzenloses Schleifen im Durchlauf ersetz werden. Weitere Implementierungen und vorteilhafte Aspekte des hier beschriebenen Verfahrens sind nachfolgend mit Bezugnahmen auf die Zeichnung Fig. 1 beschrieben.

Ein weiterer Aspekt der vorliegenden Anmeldung betrifft eine Rotorbaugruppe, umfassend: ein Mantelrohr, das ein Innenprofil mit einer Vielzahl an Längsrillen aufweist, und ein Blechpaket, das eine Vielzahl von Kanälen aufweist, die mit einem Metall vergossen sind, das eine Leitfähigkeit größer als 20 × 10⁶ S/m aufweist und dadurch einen Käfig eines Käfigläufers bilden, wobei das Blechpaket mit dem Mantelrohr kraftschlüssig verbunden ist. Beispielsweise lässt sich eine solche Rotorbaugruppe mit einem wie vorstehend beschriebene Verfahren Herstellen bzw. Formen.

Wie nachfolgend im Einzelnen mit Bezugnahme auf die Zeichnungen Fig. 4 und Fig. 5 und in der früheren Anmeldung PCT/EP2022/081331 der Anmelderin mit dem Titel *ROTOR WELLE MIT INTEGRIERTEN KÜHLKANÄLEN* beschrieben ist, deren Inhalt hier vollständig durch Verweis einbezogen sei, erlaubt es das Innenprofil des Mantelrohrs in einfacher Weise, eine effiziente aktive Rotorkühlung zu implementieren. Beispielsweise kann im Mantelrohr ein Innenrohr angeordnet werden, dessen Außenfläche mit den Längsrillen des Innenprofils des Mantelrohrs eine Vielzahl von axialen Kühlkanälen definiert. Wie vorstehend beschrieben kann gemäß der vorliegenden Anmeldung, die Außenfläche des Mantelrohrs nicht geschliffen sein und /oder das Mantelrohr kann ein gezogenes Rohr, vorzugsweise ein Rohr gemäß DIN 17458 oder gemäß ähnlicher Spezifikationen sein.

Bei einigen Implementierungen können die vergossenen Kanäle der hierin beschriebene Rotorbaugruppe eine Porosität von 2% oder weniger, vorzugsweise eine Porosität von 1% oder weniger aufweisen. Die Porosität der vergossenen Kanäle kann z.B. mittels Computertomographie oder Präzisions-Leitfähigkeitsmessungen ermittelt werden. Eine Porosität von 1% oder weniger kann hierbei z.B. so verstanden werden, dass die Gesamtporosität in einem Kurzschlussring oder einem Teilleiter des Käfigläufers nicht größer als 1% des Gesamtvolumens des Kurzschlussrings bzw. des Teilleiters sein darf.

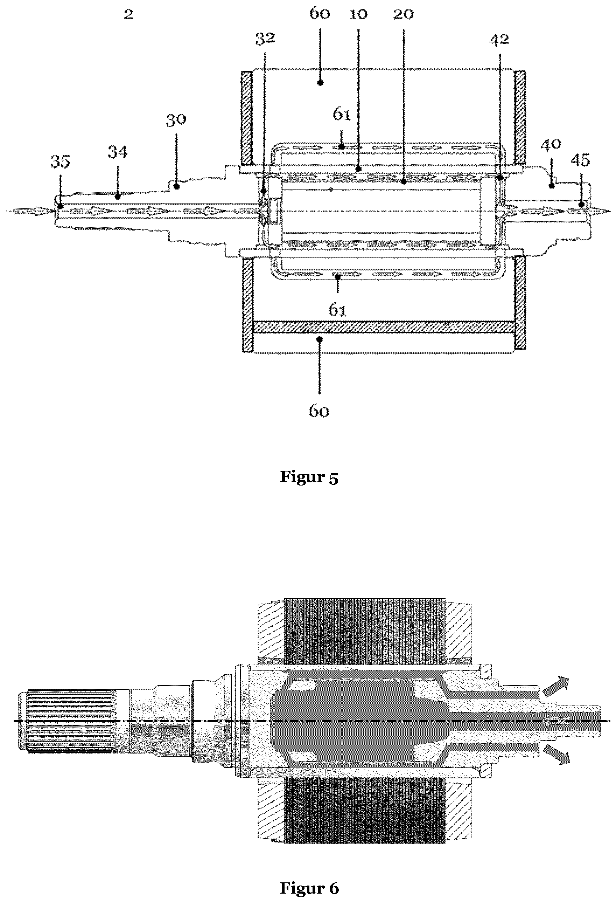

Wie nachstehend mit Bezugnahme auf Fig. 5 beschrieben ist, kann die Rotorbaugruppe in einigen Implementierungen ein Innenrohr umfassen, dass innerhalb des Mantelrohrs angeordnet ist und mit dem Innenprofil des Mantelrohrs eine Vielzahl von Kühlkanälen ausbilden kann.

Die vorliegende Anmeldung betrifft ferner einen Rotor, der eine wie hierin beschriebene Rotorbaugruppe aufweist, sowie einen ersten und eine zweiten Endstopfen, die jeweils mit einem Ende des Mantelrohrs formschlüssig und kraftschlüssig verbunden sind, indem sie in einen Teil der Vielzahl von Längsrillen eingreifen und mit dem jeweiligen Ende des Mantelrohrs verpresst sind. Das Verpressen der Endstopfen kann dabei zu einer radial nach Außen wirkenden Kraft führen, die die kraftschlüssige Verbindung zwischen Mantelrohr und Blechpaket weiter verbessert.

Wie nachfolgend mit Bezugnahme auf Fig. 5 und in der Anmeldung PCT/EP2022/081331 der Anmelderin beschrieben ist, können die Endstopfen jeweils eine Kühlmediumverteilstruktur aufweisen, die mit der Vielzahl von Längsrillen in Fluidverbindung stehen kann. Die vorliegende Anmeldung betrifft in einer ersten Ausführungsform eine Rotorbaugruppe umfassend: ein Mantelrohr, mit einem Innenprofil mit einer Vielzahl an Längsrillen, und ein Blechpaket, das eine Vielzahl von Kanälen aufweist, die mit einem Metall vergossen sind, das eine Leitfähigkeit größer als 20 × 10⁶ S/m aufweist und dadurch den Käfig eines Käfigläufers bilden, wobei das Blechpaket mit dem Mantelrohr kraftschlüssig verbunden ist.

Die hierin beschriebenen Verfahren und Rotorbaugruppen haben daher z.B. folgende technische Vorteile: (1) Die Kombination aus porenfreiem Verguss und aktiver Kühlung der Rotorwelle führt wegen der Temperaturabhängigkeit der Leitfähigkeit zu einer nicht-linearen Reduktion der Verlustleistung und damit zu einer synergistischen Erhöhung der Effizienz und / oder der Drehmomentdichte der elektrischen Maschine. (2) Durch das Zusammenfassen typischerweise getrennter Arbeitsschritte lässt sich Energie sparen. (3) Fener entfällt das aufwendige Schleifen der Außenfläche der Rotorwelle, das bei konventionellen Herstellungsverfahren typischerweise notwendig ist, da bei diesen z.B. ein bereits fertig vergossenes Blechpaket) mit einer bereits fertig geformten Rotorwelle zusammengebaut werden muss. (4) Des Weiteren kann die Innenbearbeitung des Rotorblechpakets entfallen. (5) Neben der Bearbeitung entfällt auch das aufwendige Fügen der Rotorwelle in dem fertig gegossenen Rotor, welches teilweise mittels Stickstoffkühlung der Rotorwelle und Aufwärmung des gegossenen Rotors abläuft.

Die hierin beschriebene Verfahren sowie entsprechend hergestellte Rotorbaugruppen und/oder Rotoren können dadurch zum Beispiel die folgenden weiteren Vorteile liefern: eine schnelle Montierbarkeit der Endstopfen und der Bauteile zur Kühlung, kurzfristige Verfügbarkeit von Prototypen und Kleinserien, viele Möglichkeiten zur Designänderung (z.B. hinsichtlich definierter Kühlbereiche), vergrößerte Innenoberfläche und Oberflächenkonvektion in Rotorbaugruppen und/oder Rotoren, Optimierung der Strömungen und deren Turbulenzen in Rotorbaugruppen und/oder Rotoren, Realisierung eines einstellbaren Ölstrommanagement und/oder Realisierung eines Kühleffekts auch ohne Rotation im Stillstand der elektrischen Maschine.

### 4. Kurzbeschreibung der Zeichnungen

Die Zeichnungen zeigen:
Figur 1: ein Ablaufdiagramm eines beispielhaften Verfahrens zum Formen einer Rotorbaugruppe nach einer möglichen Implementierung der vorliegenden Anmeldung;
Figur 2: einige Zwischenerzeugnisse bzw. Zwischenschritte des Verfahrens von Figur 1;
Figur 3: zwei beispielhafte Querschnittsansichten eines Mantelrohrs mit einem auf dem Mantelrohr angebrachten Rotorblechpaket gemäß einer möglichen Implementierung der vorliegenden Anmeldung;
Figur 4: eine Querschnittsansicht eines Rotors gemäß einer möglichen Implementierung der vorliegenden Anmeldung umfassend ein Mantelrohr, an dem ein Blechpaket angebracht ist und in dessen beide Enden jeweils ein Endstopfen eingepresst ist;
Figur 5: einen Rotor mit aktiver Kühlung und porenfrei vergossenem Käfig gemäß einer möglichen Implementierung der vorliegenden Anmeldung;
Figur 6: einen Rotor mit aktiver Kühlung und porenfrei vergossenem Käfig gemäß einer möglichen Implementierung der vorliegenden Anmeldung.

### 5. Detaillierte Beschreibung einiger Ausführungsbeispiele

Im Folgenden sind einige exemplarische Ausführungsformen der Verfahren und Rotorbaugruppen, bzw. Rotoren der vorliegenden Anmeldung am Beispiel einiger exemplarischer Rotorbaugruppen bzw. Rotoren für elektrische Maschinen beschrieben. Hierbei sind verschiedenen Merkmalskombinationen mit Bezugnahme auf die dargestellten Ausführungsformen beschrieben. Naturgemäß müssen nicht alle Merkmale der beschriebenen Ausführungsformen vorhanden sein, um die vorliegende Erfindung zu realisieren. Ferner können die Ausführungsformen durch Kombinieren gewisser Merkmale einer Ausführungsform mit einem oder mehreren Merkmalen einer anderen Ausführungsform modifiziert werden - falls dies technisch kompatibel und sinnvoll ist - ohne von der Offenbarung und dem Schutzumfang der vorliegenden Erfindung abzuweichen, der durch die Patentansprüche definiert ist.

Figur 1 zeigt ein Ablaufdiagramm eines Verfahrens 100 zum Formen einer Rotorbaugruppe gemäß der vorliegenden Anmeldung. Das Verfahren 100 kann einen Schritt 110 des Formens eines Mantelrohrs mit einer Länge L umfassen. Schritt 110 kann die Teilschritte 111, 112, 113 umfassen. Teilschritt 111 kann ein Formen eines Mantelrohrrohlings umfassen, z.B. durch Kaltumformung. Teilschritt 112 kann ein Bestimmen eines kalibrierten Abschnitts des Mantelrohrrohlings mit der Länge L umfassen, wobei entlang der Länge L die Abweichung der Mantelfläche des kalibrierten Abschnitts des Mantelrohrrohlings von der vorbestimmten Mantelreferenzfläche um weniger als 0.04 mm, vorzugsweise weniger als 0.02 mm, abweichen kann.

Teilschritt 113 kann ein Abtrennen des kalibrierten Abschnitts des Mantelrohrrohlings umfassen. Auf diese Weise kann sichergestellt werden, dass das Mantelrohr der Rotorwelle, die für die nachfolgenden Fertigungsschritte notwendigen Toleranzen einhält, die gemäß der vorliegenden Offenbarung weniger genau sein können als bei konventionellen Verfahren, bei denen ein fertig vergossenes Blechpaket mit einer fertig geformten Rotorwelle zusammengefügt wird.

Das Bestimmen des kalibrierten Abschnitts des Mantelrohrrohlings kann z.B. ein Messen der Abweichung der Mantelfläche des kalibrierten Abschnitts des Mantelrohrrohlings von der vorbestimmten Mantelreferenzfläche umfassen, beispielsweise durch Messen der Oberflächenwelligkeit des Mantelrohrrohlings oder dessen ganzer 3D Form, z.B unter Verwendung einer 3D Triangulation mit mehreren Kameras oder Lasermessgeräten.

Schritt 120 umfasst ein Erhitzen eines Rotorblechpakets, das eine Vielzahl von Kanälen für einen Käfig eines Käfigläufers aufweist (z.B. für lamellenförmige Leiter, die zwei Kurzschlussringe eines Käfigläufers verbinden). Insbesondere wird das Rotorblechpaket auf eine Temperatur erhitzt, die dazu führt, dass sich ein Innendurchmesser des Rotorblechpaket durch thermische Ausdehnung vergrößert (z.B. T ≥ 50°C, vorzugsweise T ≥ 200°C, oder mehr bevorzugt T ≥ 500°). Der vergrößerte Innendurchmesser erleichtert das Anordnen der Rotorbaugruppe auf einem Mantelrohr einer Rotorwelle in Schritt 130.

Schritt 130 umfasst ein Formen der Rotorbaugruppe. Schritt 130 kann dabei die Teilschritte 131 und 132 umfassen. Teilschritt 131 umfasst ein Anordnen des erhitzen Rotorblechpakets auf einem Mantelrohr einer Rotorwelle und Teilschritt 132 umfasst ein Vergießen der Kanäle des erhitzen Rotorblechpakets mit einem Metall, das eine Leitfähigkeit größer als 20 × 10⁶ S/m aufweist. Vorzugsweise wird das Vergießen durchgeführt, nachdem das Rotorblechpaket auf dem Mantelrohr angeordnet ist. Das vorherige Erhitzen des Rotorblechpakets erleichtert dabei, wegen des vergrößerten Innendurchmessers des Rotorblechpakets einerseits das Anordnen des Rotorblechpakets auf dem Mantelrohr und ist darüber hinaus auch für das Vergießen vorteilhaft, da z.B. thermische Spannungen reduziert werden, die durch einen großen Temperaturunterschied zwischen dem geschmolzenen Metall und dem Rotorblechpaket beim Vergießen der Kanäle auftreten können. Insbesondere kann das Vergießen unter Verwendung einer Gießform und / oder eines Gießverfahrens durchgeführt werden, wie sie in den vorstehend genannten Anmeldungen EP 3 866 315 A1, EP 386 6316 A1, EP 3 113 337 und DE 10 2013 208 151 A1 der Anmelderin beschrieben sind.

In einigen Implementierungen kann sich eine erste Temperatur während des Anordnens des Rotorblechpakets auf dem Mantelrohr von einer zweiten Temperatur während des Vergießens der Kanäle des erhitzen Rotorblechpakets 132 um 20% oder weniger, vorzugsweise um 10% oder weniger unterscheiden. Alternativ oder zusätzlich kann ein Zeitabstand zwischen dem Anordnen des Rotorblechpakets und dem Vergießen der 20 Minuten oder weniger, bevorzugt 10 Minuten oder weniger betragen. Dadurch lässt sich sicherstellen, dass möglichst viel thermische Energie beim Vergießen der Kanäle wiederverwendet werden kann.

Zum Beispiel kann das Metall (z.B. Aluminium, Kupfer, Silber) beim Vergießen der Kanäle des erhitzen Rotorblechpakets eine dritte Temperatur zwischen 600°C und 1400°C aufweisen. Aufgrund der gemeinsamen bzw. direkt aufeinanderfolgenden Ausführung der Teilschritte 132 und 133 kann das Verfahren so durchgeführt werden, dass das Rotorblechpaket vor dem Vergießen der Kanäle 132 nur einmal erhitz wird, und zwar vor bzw. beim Anordnen der Rotorbaugruppe auf dem Mantelrohr.

Ferner kann das Formen der Rotorbaugruppe ein Fügen von einem oder zwei Endstopfen mit dem Mantelrohr umfassen, vorzugsweise vor dem Vergießen der Kanäle 132. Das Fügen der ein oder der zwei Endstopfen kann dabei z.B. ein Einpressen des einen oder der zwei Endstopfen in das Mantelrohr umfassen. Dies ist in Fig. 5 beispielhaft dargestellt. Fig. 5 zeigt eine Querschnittsansicht eines Rotors umfassend ein Mantelrohr 10, an dem ein Blechpaket 60 angebracht ist und in dessen beide Enden jeweils ein Endstopfen 30, 40 eingepresst ist. Nach dem Einpressen können die Endstopfen ggf. noch zusätzlich mit dem Mantelrohr verlötet oder verschweißt werden. Die Reihenfolge des Einpressens des einen oder der zwei Endstopfen in das Mantelrohr ist dabei variabel und kann je nach den Fertigungsanforderungen gewählt werden.

Schritt 140 umfasst ein Abkühlen der Rotorbaugruppe, um eine kraftschlüssige Verbindung zwischen dem Rotorblechpaket und dem Mantelrohr auszubilden. Das Abkühlen führt insbesondere dazu, dass sich der Innendurchmesser des Rotorblechpakets wieder reduziert, was zum Ausbilden der kraftschlüssigen Verbindung beiträgt.

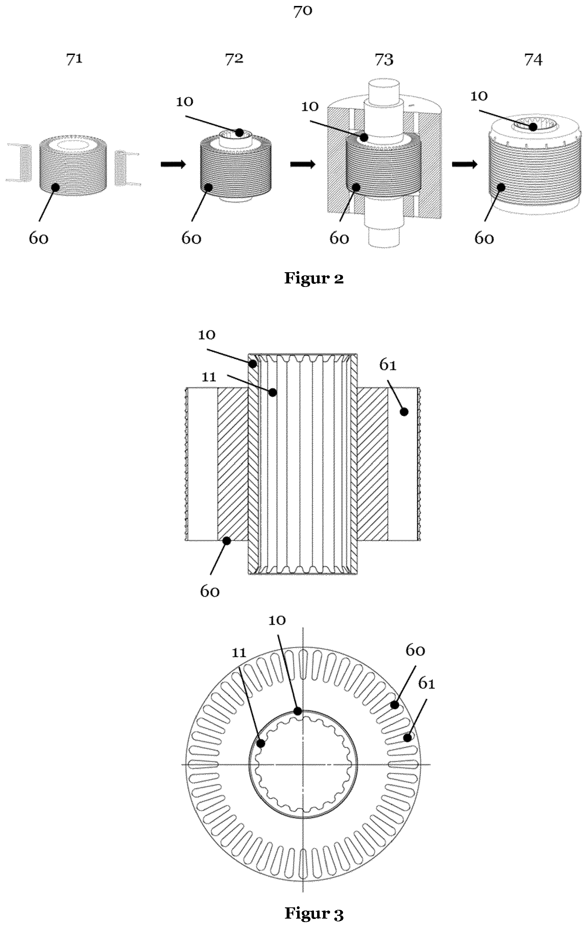

Fig. 2 illustriert das hierin beschriebene Verfahren zum Formen einer Rotorbaugruppe anhand vier exemplarischer Zwischenergebnisse 71, 72, 73, und 74, die im Folgenden beschrieben sind. Zwischenergebnis 71 betrifft das Erhitzen des Rotorblechpakets 60, das eine Vielzahl von Kanälen und eine zentrale Bohrung aufweist. Im dargestellten Beispiel erfolgt dies mittels Heizspulen, die in der Nähe des Rotorblechpakets 60 platziert werden, um dieses zu erhitzen.

Zwischenergebnis 72 zeigt den Zustand nach dem Anordnen des erhitzten Rotorblechpakets 60 auf dem Mantelrohr 10 der Rotorwelle, das ein Innenprofil mit einer Vielzahl an Längsrillen aufweist. In einem weiteren Teilschritt kann z.B. ein Innenrohr in das Mantelrohr 60 eingesetzt werden und zwei Endstopfen mit dem Mantelrohr gefügt werden, um eine aktiv gekühlte Rotorwelle mit einer Vielzahl von axialen Kühlkanälen zu bilden, wie sie in der Anmeldung PCT/EP2022/081331 der Anmelderin beschrieben ist. Da das Blechpaket warm ist hat sich der Innendurchmesser der Bohrung durch Wärmeausdehnung vergrößert. Daher ist ein Fügen von Rotorblechpaket 60 und Mantelrohr 10 der Rotorwelle mit geringem Kraftaufwand möglich.

Zwischenergebnis 73 zeigt, wie die vormontierte Baugruppe in einem geeigneten Werkzeug der Maschine zum Vergießen bzw. einer Gussform aufgenommen ist, in der das Vergießen der Kanäle und ggf. der beiden Kurzschlussringe des Käfigläufers durchgeführt werden kann. Im Beispiel von Fig 2 wird das Anordnen des erhitzen Rotorblechpakets 60 auf dem Mantelrohr 10 vor dem Vergießen der Kanäle des erhitzen Rotorblechpakets durchgeführt. Es sind jedoch auch Implementierungen möglich bei denen das noch nicht vollständig abgekühlte vergossene Blechpaket auf dem Mantelrohr angeordnet wird.

Zwischenergebnis 74 zeigt eine Rotorbaugruppe gemäß der vorliegenden Anmeldung beim und/oder nach dem Abkühlen. Diese umfasst das Rotorblechpaket 60 mit vergossenen Kanälen und Kurzschlussringen auf dem Mantelrohr 10 mit dem Innenprofil, das die Vielzahl von Längsrillen aufweist. Die beiden genannten Komponenten sind dabei nach dem Abkühlen kraftschlüssig miteinander verbunden. Die Längsrillen ermöglichen einerseits das Ausbilden einer form- und kraftschlüssigen Verbindung mit zwei entsprechend profilierten Endstopfen und das Ausbilden von axialen Kühlkanälen, durch Anordnen eines Innenrohrs im Mantelrohr wie es in der Anmeldung PCT/EP2022/081331 der Anmelderin beschrieben ist.

Figur 3 zeigt zwei beispielhafte Querschnittsansichten eines Mantelrohrs 10, das eine Innenprofil mit einer Vielzahl von Längsrillen 11 umfasst, und eines auf dem Mantelrohr 10 angebrachten Rotorblechpaket 60 vor dem Vergießen der Kanäle 61 des Käfigläufers.

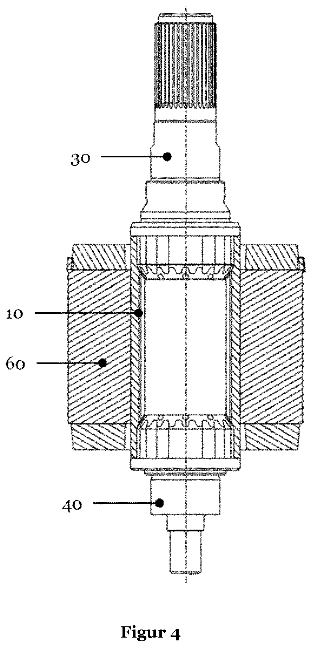

Figur 4 zeigt einen Rotor für eine elektrische Maschine (z.B. eine Asynchronmaschine als Antrieb eines Elektrofahrzeugs). Der Rotor umfasst eine Rotorbaugruppe wie vorstehend beschrieben sowie zwei mit dem Mantelrohr verbundene Endstopfen 30 und 40, die jeweils eine Kühlmittelverteilstruktur aufweisen.

Figur 5 zeigt einen Längsschnitt durch einen Rotor 2 gemäß einer möglichen Implementierung der vorliegenden Anmeldung. Der Rotor 2 umfasst ein Mantelrohr 10 mit einer Wanddicke z.B. im Bereich von 2,00 mm bis 10,00 mm und mit einem Innenprofil, das eine Vielzahl von Längsrillen aufweist (vgl. Fig. 2, Fig. 3 und Fig. 4). Der beispielhafte Rotor 2 umfasst zudem ein Innenrohr 20, beispielsweise mit einer Wanddicke von 0,5 mm bis 5,00 mm, einen ersten Endstopfen 30, einen zweiten Endstopfen 40. Im Beispiel von Fig. 5 weist der erste Endstopfen 30 einen Zulauf 35 für ein Kühlmedium auf, der mit einer Kühlmediumverteilstruktur 32 des ersten Endstopfens 30 verbunden ist. Der zweite Endstopfen 40 weist einen Ablauf 45 für das Kühlmedium auf, der mit der Kühlmediumverteilstruktur 42 verbunden ist. Der Fluss des Kühlmediums durch die zwischen Innenrohr 20 und dem Innenprofil des Mantelrohrs 10 definierten Kühlkanäle und durch weitere Kühlkanäle 61 im Rotorblechpaket 60 ist schematisch durch die Pfeile dargestellt. Über die dargestellten Kühlkanäle kann das Kühlmedium vom ersten Endstopfen 30 zum zweiten Endstopfen 40 gelangen, wo es von der Kühlmediumverteilstruktur 42 des zweiten Endstopfens 40 aufgenommen und zum Ablauf 45 geleitet werden kann. Damit befinden sich in dieser möglichen Ausführungsform Zulauf und Ablauf des Kühlmediums an unterschiedlichen Endstopfen des Rotors.

Wie vorstehend beschrieben, kann das Blechpaket 60 eine Vielzahl von mit einem Metall (z.B. Aluminium) porenfrei vergossenen Kanälen umfassen. Insbesondere kann die Porosität der vergossenen Kanäle ≤ 1% betragen, um den elektrischen Widerstand der durch die vergossenen Kanäle gebildeten Leiter des Käfigs des Käfigläufers möglichst gering zu halten. Die Kombination von aktiver Rotorkühlung und porenfreiem Verguss des Käfigs des Käfigläufers führt dazu, dass bei vorgegebenen Dimensionen des Rotorblechpakets 60 die im Betrieb maximal zu erreichende Drehmomentdichte und elektrische Effizienz der elektrischen Maschine (z.B. einer Asynchronmaschine) in Bereiche gesteigert werden kann, die mit konventionellen Käfigläufern (passive Kühlung, höhere Porosität der vergossenen Kanäle) nur sehr schwer oder gar nicht erreichbar sind.

Der Grund dafür ist, dass die elektrische Verlustleistung P_{L} = R × I² in den gegossenen Leitern und Kurzschlussringen des Käfigläufers (in Fig. 5 schraffiert dargestellt) typischerweise im Betrieb substanziell zur Erwärmung des Rotors 2 beiträgt. Durch den vorstehend beschriebenen porenfreien Verguss lässt sich der Widerstand R bei gegebener Dimensionierung des Rotorblechpakets 60 reduzieren und damit bei einer vorgegebenen Maximaltemperatur des Rotors im Betrieb höhere maximale Stromdichten im Rotorblechpaket und damit eine höhere maximale Drehmomentdichte der elektrischen Maschine erreichen. Die dargestellte aktive Kühlung der Rotorwelle und des Rotorblechpakets 60 erlaubt es die Stromdichte im Käfig des Blechpakets 60 weiter zu steigern, da ein größerer Teil der elektrischen Verlustleistung abgeführt werden kann. Wegen der Temperaturabhängigkeit des spezifischen Widerstands von Metallen, der in erster Näherung linear mit der Temperatur des Metalls ansteigt, führt die Kombination von porenfreiem Verguss und der dargestellten aktiven Rotorkühlung zu einer nicht-linearen Steigerung der Effizienz und der maximal erreichbaren Drehmomentdichte und Leistungsdichte der elektrischen Maschine. Insbesondere lassen sich mit den hier beschriebenen aktiv gekühlten Käfigläufern kompakte und leistungsstarke Asynchronmaschinen für Anwendungsbereiche konstruieren, bei denen üblicherweise nur wesentlich komplexere und teurere Rotoren mit Neodym-Eisen-Bor Magneten zum Einsatz kommen.

Figur 6 zeigt eine weitere mögliche Ausführungsform eines aktiv gekühlten Rotors gemäß der vorliegenden Anmeldung, bei dem das Kühlmittel am gleichen Endstopfen zu- and abläuft.

## Patentansprüche

1. Verfahren zum Formen einer Rotorbaugruppe, umfassend:
Erhitzen (120) eines Rotorblechpakets (60), das eine Vielzahl von Kanälen (61) für einen Käfig eines Käfigläufers aufweist, vorzugsweise auf eine Temperatur T ≥ 50°C, mehr bevorzugt auf eine Temperatur T ≥ 200°C, und noch mehr bevorzugt auf eine Temperatur T ≥ 500°C;
Formen (130) der Rotorbaugruppe, durch Anordnen (131) des erhitzen Rotorblechpakets (60) auf dem Mantelrohr (10); und Vergießen (132) der Kanäle des erhitzen Rotorblechpakets mit einem Metall, das eine Leitfähigkeit größer als 20 × 10⁶ S/m aufweist; und
Abkühlen (140) der Rotorbaugruppe, um eine kraftschlüssige Verbindung zwischen dem Rotorblechpaket (60) und dem Mantelrohr (10) auszubilden.

2. Verfahren nach Anspruch 1, ferner umfassend
Formen eines Mantelrohrs mit einer Länge L, wobei das Formen des Mantelrohrs ferner, vorzugweise die folgenden Schritte umfasst:
Formen eines Mantelrohrrohlings;
Bestimmen eines kalibrierten Abschnitts des Mantelrohrrohlings mit der Länge L, wobei entlang der Länge L die Abweichung der Mantelfläche des kalibrierten Abschnitts des Mantelrohrrohlings von der vorbestimmten Mantelreferenzfläche um weniger als 0.04 mm, vorzugsweise weniger als 0.02 mm, abweicht; und
Abtrennen des kalibrierten Abschnitts des Mantelrohrrohlings.

3. Verfahren nach Anspruch 2, wobei das Bestimmen des kalibrierten Abschnitts des Mantelrohrrohlings ein Messen der Abweichung der Mantelfläche des kalibrierten Abschnitts des Mantelrohrrohlings von der vorbestimmten Mantelreferenzfläche umfasst.

4. Verfahren nach einem der Ansprüche 1 bis 3, wobei das Anordnen des erhitzen Rotorblechpakets auf dem Mantelrohr vor dem Vergießen der Kanäle des erhitzen Rotorblechpakets durchgeführt wird und/oder wobei entlang der Länge L eine Abweichung der Mantelfläche des Mantelrohrs von einer vorbestimmten Mantelreferenzfläche um weniger als 0.04 mm, vorzugsweise um weniger als 0.02 mm abweicht.

5. Verfahren nach Ansprüche 1 bis 4,
wobei sich eine erste Temperatur während des Anordnens des Rotorblechpakets auf dem Mantelrohr von einer zweiten Temperatur während des Vergießens der Kanäle des erhitzen Rotorblechpakets um 20% oder weniger, vorzugsweise um 10% oder weniger unterscheidet; und/oder
wobei ein Zeitabstand zwischen dem Anordnen des Rotorblechpakets und dem Vergießen der Kanäle 20 Minuten oder weniger, bevorzugt 10 Minuten oder weniger beträgt; und / oder
wobei ein Zeitabstand der zwischen dem Vergießen der Kanäle und dem Abkühlen der Rotorbaugruppe auf eine Raumtemperatur 4 Stunden oder weniger, bevorzugt 60 Minuten oder weniger beträgt.

6. Verfahren nach einem der Ansprüche 1 bis 5, wobei das Metall beim Vergießen der Kanäle des erhitzen Rotorblechpakets eine dritte Temperatur zwischen 600°C und 1400°C aufweist.

7. Verfahren nach einem der Ansprüche 1 bis 6, wobei das Rotorblechpaket vor dem Vergießen der Kanäle nur einmal erhitz wird.

8. Verfahren nach einem der Ansprüche 1 bis 7, wobei das Formen der Rotorbaugruppe ferner ein Fügen von einem oder zwei Endstopfen mit dem Mantelrohr umfasst, vorzugsweise vor dem Vergießen der Kanäle, wobei das Fügen der ein oder der zwei Endstopfen, vorzugsweise ein Einpressen des einen oder der zwei Endstopfen in das Mantelrohr umfasst.

9. Verfahren nach Anspruch 8, ferner umfassend ein Verschweißen oder ein Verlöten des einen oder der zwei Endstopfen mit dem Mantelrohr.

10. Rotorbaugruppe, umfassend:
ein Mantelrohr, das ein Innenprofil mit einer Vielzahl an Längsrillen aufweist; und
ein Blechpaket, das eine Vielzahl von Kanälen aufweist, die mit einem Metall vergossen sind, das eine Leitfähigkeit größer als 20 × 10⁶ S/m aufweist und dadurch einen Käfig eines Käfigläufers bilden;
wobei das Blechpaket mit dem Mantelrohr kraftschlüssig verbunden ist.

11. Rotorbaugruppe nach Anspruch 10, wobei das Mantelrohr senkrecht zur Längsachse eine n-fache Rotationssymmetrie aufweist, wobei n eine beliebige natürliche Zahl größer oder gleich 2 ist.

12. Rotorbaugruppe nach einem der Ansprüche 10 bis 11, wobei das Mantelrohr eine Außenfläche aufweist, die nicht geschliffen ist und / oder wobei das Mantelrohr ein gezogenes Rohr, vorzugsweise ein Rohr nach DIN 17458 ist.

13. Rotorbaugruppe nach einem der Ansprüche 10 bis 12, wobei die vergossenen Kanäle des Rotorblechpakets eine Porosität von 2% oder weniger, bevorzugt on 1% oder weniger aufweisen; und / oder ferner umfassend:
ein Innenrohr, dass innerhalb des Mantelrohrs angeordnet ist und mit dem Innenprofil des Mantelrohrs eine Vielzahl von Kühlkanälen ausbildet.

14. Rotor für eine elektrische Maschine, umfassend:
eine Rotorbaugruppe nach einem der Ansprüche 10 bis 13; und
einen ersten und eine zweiten Endstopfen, die jeweils mit einem Ende des Mantelrohrs formschlüssig und kraftschlüssig verbunden sind, indem sie in einen Teil der Vielzahl von Längsrillen eingreifen und mit dem jeweiligen Ende des Mantelrohrs verpresst sind; und
wobei die Endstopfen jeweils eine Kühlmediumverteilstruktur aufweisen, die mit der Vielzahl von Längsrillen in Fluidverbindung stehen.

15. Elektrische Maschine, umfassend einen Stator und einen Rotor nach Anspruch 14, der drehbar innerhalb des Stators gelagert ist.
